# DEMANDE DE BREVET EUROPEEN

(11) **EP 4 628 367 A1**
(43) Date de publication de la demande: **08.10.2025**
(21) Numéro de dépôt: 25167758.9
(22) Date de dépôt: 01.04.2025
(51) Int. Cl.: B60R 19/18

(54) **DISPOSITIF D ABSORPTION DE CHOC DE VÉHICULE AUTOMOBILE**

(30) Priorité: 02.04.2024 FR 2403388
(71) Demandeur: Flex-N-Gate France, 25405 Audincourt (FR)
(72) Inventeur: BERGERAT, Stéphanie, 25405 AUDINCOURT (FR); FOUCARD, Mathieu, 25405 AUDINCOURT (FR); BLANC, Lionel, 25405 AUDINCOURT (FR)
(74) Mandataire: Lavoix

(57) **Abrégé**

Le dispositif (10) d'absorption de choc est destiné à être rapporté en avant d'une poutre transversale (8) du véhicule (5). Il comporte une première traverse (14) rigide, destinée à être agencée en contact de ladite poutre transversale (8), et une seconde traverse (16) de rigidité inférieure à celle de la première traverse (14), comprenant une première partie (16a) agencée en avant de la première traverse (14), et une seconde partie (16b) s'étendant au-dessus de la première traverse (14).

## Description

La présente invention concerne un dispositif d'absorption de choc, destiné à équiper un véhicule automobile.

Un pare-chocs de véhicule automobile comporte habituellement une enveloppe décorative externe, appelée peau, et un dispositif d'absorption de l'énergie d'un choc, destiné à consommer l'énergie d'un choc en se déformant afin d'en transmettre le moins possible au véhicule.

Différents types de chocs sont envisagés lors de l'élaboration d'un dispositif d'absorption de chocs, à savoir les chocs à haute vitesse qui correspondent à un impact frontal du véhicule contre un obstacle rigide ou déformable à une vitesse de 56 à 64 km/h, les chocs « assurances » tels que celui connu sous le nom de « Danner », à 15 km/h contre un mur fixe, et les petits chocs, ou chocs « parking » à une vitesse comprise entre 4 et 8 km/h. On envisage les chocs à haute vitesse avec un objectif de protection des occupants du véhicule, tandis que les chocs « assurances » et « parking », c'est-à-dire les « petits chocs », correspondent plutôt à un objectif de réduction des coûts de réparation. Il est également nécessaire d'envisager les chocs piétons, qui respecter la jambe du piéton afin de limiter les blessures graves et handicapantes.

La présente invention concerne plus particulièrement un dispositif d'absorption de chocs destiné au traitement des petits chocs et des chocs piétons.

Le dispositif d'absorption de choc est destiné, de manière classique, à être rapporté en avant d'une poutre transversale du véhicule.

Un tel véhicule automobile comporte également habituellement une calandre, également en avant de la poutre transversale. Plus particulièrement, dans le cadre d'une calandre comprenant des pièces d'éclairage, il est souhaité que cette calandre ne vienne pas en contact avec la poutre tranversale lors d'un petit choc (notamment un choc parking ou piéton), afin de sauvegarder ces pièces d'éclairage.

Ainsi, l'invention a notamment pour but de proposer un dispositif d'absorption de choc capable de protéger la calandre en cas de petit choc.

A cet effet, l'invention a notamment pour objet un dispositif d'absorption de choc de véhicule automobile, destiné à être rapporté en avant d'une poutre transversale du véhicule, caractérisé en ce qu'il comporte :
- une première traverse rigide, destinée à être agencée en contact de ladite poutre transversale, et
- une seconde traverse de rigidité inférieure à celle de la première traverse, comprenant une première partie agencée en avant de la première traverse, et une seconde partie s'étendant au-dessus de la première traverse.

L'invention permet de découpler les fonctions « piéton » et « petits chocs ». La première traverse, rigide, agit comme une entretoise et permet de borner l'intrusion des butoirs chocs parking (type ECE42 et équivalents). L'enfoncement de la calandre est ainsi limité, si bien que la calandre ne vient pas en contact avec la poutre avant en cas de petit choc ou de choc piéton.

La seconde traverse, souple, permet de gérer la fonction choc piéton jambe, et dans le même temps, elle permet de garantir la répétabilité des chocs parking.

Un dispositif d'absorption selon l'invention peut présenter en outre l'une ou plusieurs des caractéristiques suivantes, prises seules ou selon toutes combinaisons techniquement envisageables
- La première traverse est réalisée en polyéthylène injecté.
- La seconde traverse est réalisée en polypropylène expansé.
- La seconde traverse est surmoulée sur la première traverse.
- La seconde traverse est fixée à la première traverse, par exemple par encliquetage.
- La seconde traverse comporte des moyens de fixation sur un pare-chocs du véhicule, par exemple des moyens d'encliquetage.
- Le dispositif d'absorption comporte des moyens de fixation de la première traverse sur la poutre du véhicule.

L'invention concerne également un véhicule automobile, comportant une poutre transversale avant, caractérisé en ce qu'il comporte un dispositif d'absorption tel que défini précédemment, agencé en avant de ladite poutre transversale.

De préférence, le véhicule automobile comporte une calandre agencée en avant de la poutre, les première et seconde traverses étant configurées pour que, lorsque la première partie de la seconde traverse est comprimée, la calandre reste à l'écart de la poutre.

Différents aspects et avantages de l'invention seront mis en lumière dans la description qui va suivre, donnée uniquement à titre d'exemple non limitatif, et faite en référence aux dessins dans lesquels :

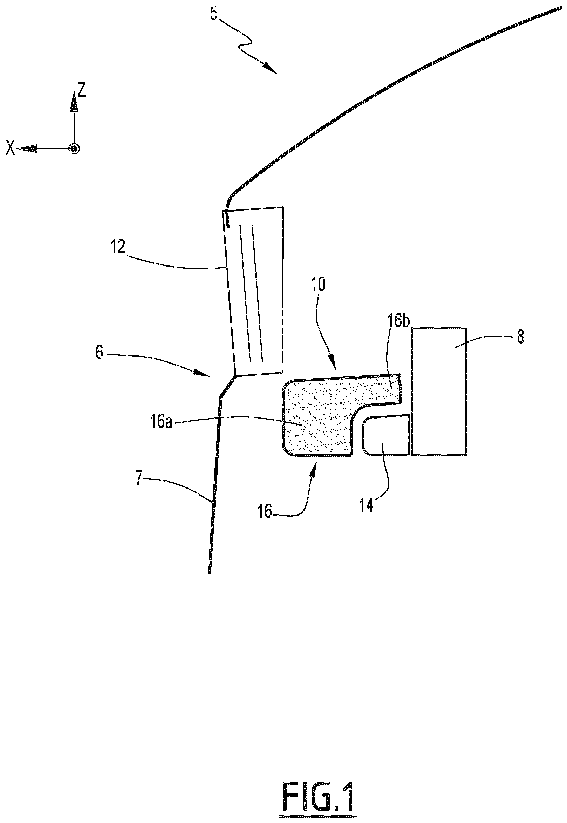

[Fig. 1] la figure 1 est une vue schématique en coupe d'un dispositif d'absorption selon un exemple de mode de réalisation de l'invention ;
[Fig. 2] la figure 2 est une vue similaire à la figure 1 du dispositif d'absorption après un choc.

On a représenté, sur les figures, une zone avant d'un véhicule automobile 5. Dans la présente description, le terme « avant » est à considérer vis-à-vis d'une orientation classique du véhicule automobile 5, dans une direction longitudinale X du véhicule.

Le véhicule automobile 5 comporte un pare-chocs 6, comprenant une peau de pare-chocs 7 classique, une poutre transversale avant 8 classique, et un dispositif d'absorption 10 selon un exemple de mode de réalisation de l'invention.

Le véhicule automobile 5 porte également une calandre 12. La calandre 12 est agencée en avant de la poutre transversale 8 dans la direction longitudinale X. Au moins une partie de la calandre 12 se trouve à hauteur d'au moins une partie de la poutre 8 dans une direction verticale Z.

La calandre 12 est par exemple du type auto-éclairée, et porte donc des pièces d'éclairage.

Le dispositif d'absorption 10 comporte une première traverse rigide 14, destinée à être agencée en contact de ladite poutre transversale 8. De préférence, le dispositif d'absorption 10 comporte des moyens de fixation de la première traverse 14 sur la poutre transversale 8.

La première traverse 14 présente une rigidité suffisante pour rester indéformable en cas de petit choc, c'est-à-dire de choc inférieur à 8 km/h. Par exemple, la première traverse 14 présente un module d'Young supérieur à 2000 MPa.

La première traverse 14 est par exemple réalisée en polyéthylène injecté. Le polyéthylène peut être, dans une variante, chargé en talc, ou dans une autre variante, dépourvu de talc.

Le dispositif d'absorption 10 comporte une seconde traverse 16 de rigidité inférieure à celle de la première traverse 14 (donc présentant un module d'Young inférieur à celui de la première traverse 14). Par exemple, la seconde traverse 16 présente un module d'Young inférieure à 1000 MPa.

Par exemple, la seconde traverse 16 est réalisée en polypropylène expansé. De préférence, le grammage de la seconde traverse 16 est compris entre 30g/l et 60 g/l.

La seconde traverse 16 comporte une première partie 16a agencée en avant de la première traverse 14 (c'est-à-dire alignée dans la direction longitudinale X), et une seconde partie 16b s'étendant au-dessus de la première traverse 14 (dans la direction verticale Z).

Conformément à une première variante de réalisation, la seconde traverse 16 est surmoulée sur la première traverse 14.

Conformément à une seconde variante de réalisation, la seconde traverse 16 est fixée à la première traverse 14, par exemple par encliquetage.

Préférentiellement, la seconde traverse 16 comporte des moyens de fixation sur le pare-chocs 6 du véhicule 5, par exemple des moyens d'encliquetage.

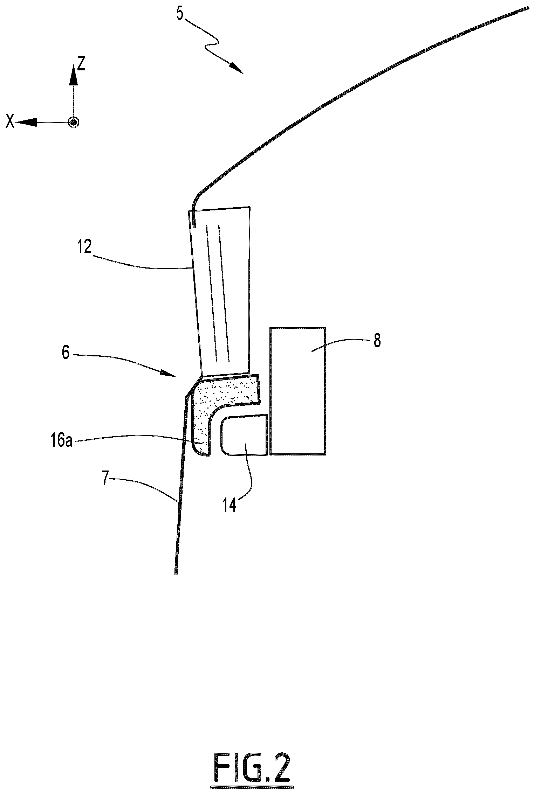

Les première 14 et seconde 16 traverses sont configurées pour que, lorsque la première partie 16a de la seconde traverse 16 est comprimée, la calandre 12 reste à l'écart de la poutre 8, comme cela est représenté sur la figure 2. A cet effet, la somme de la dimension, dans la direction longitudinale X, de la première traverse 14 et de la dimension, dans la direction longitudinale X, de la première partie 16a écrasée, est supérieure à la dimension de la calandre 12 dans la direction longitudinale X.

En d'autres termes, la première partie 16a est configurée pour être comprimable; jusqu'à une dimension comprimée telle que la somme de la dimension, dans la direction longitudinale X, de la première traverse 14 et de la dimension comprimée, dans la direction longitudinale X, de la première partie 16a comprimée, est supérieure à la dimension de la calandre 12 dans la direction longitudinale X. Ainsi, lorsque la première partie 16a de la seconde traverse 16 est comprimée, la calandre 12 reste à l'écart de la poutre 8.

## Revendications

1. Dispositif (10) d'absorption de choc de véhicule automobile (5), destiné à être rapporté en avant d'une poutre transversale (8) du véhicule (5), **caractérisé en ce qu'**il comporte :
- une première traverse (14) rigide, destinée à être agencée en contact de ladite poutre transversale (8), et
- une seconde traverse (16) de rigidité inférieure à celle de la première traverse (14), comprenant une première partie (16a) agencée en avant de la première traverse (14), et une seconde partie (16b) s'étendant au-dessus de la première traverse (14).

2. Dispositif d'absorption (10) selon la revendication 1, dans lequel la première traverse (14) est réalisée en polyéthylène injecté.

3. Dispositif d'absorption (10) selon la revendication 1 ou 2, dans lequel la seconde traverse (16) est réalisée en polypropylène expansé.

4. Dispositif d'absorption (10) selon l'une quelconque des revendications 1 à 3, dans lequel la seconde traverse (16) est surmoulée sur la première traverse (14).

5. Dispositif d'absorption (10) selon l'une quelconque des revendications 1 à 3, dans lequel la seconde traverse (16) est fixée à la première traverse (14), par exemple par encliquetage.

6. Dispositif d'absorption (10) selon l'une quelconque des revendications précédentes, dans lequel la seconde traverse (16) comporte des moyens de fixation sur un pare-chocs (6) du véhicule, par exemple des moyens d'encliquetage.

7. Dispositif d'absorption (10) selon l'une quelconque des revendications précédentes, comportant des moyens de fixation de la première traverse (14) sur la poutre (8) du véhicule.

8. Véhicule automobile (5), comportant une poutre transversale avant (8), **caractérisé en ce qu'**il comporte un dispositif d'absorption (10) selon l'une quelconque des revendications précédentes, agencé en avant de ladite poutre transversale (8).

9. Véhicule automobile selon la revendication 8, comportant une calandre (12) agencée en avant de la poutre (8), les première (14) et seconde (16) traverses étant configurées pour que, lorsque la première partie (16a) de la seconde traverse (16) est comprimée, la calandre (12) reste à l'écart de la poutre (8).
